# EUROPÄISCHE PATENTSCHRIFT

(11) **EP 1 109 684 B1**
(45) Veröffentlichungstag und Bekanntmachung des Hinweises auf die Patenterteilung: **19.03.2003**
(21) Anmeldenummer: 00941889.8
(22) Anmeldetag: 27.04.2000
(51) Int. Cl.: B60G 17/005, F16F 9/05

(54) **SELBSTSCHLIESSENDE LUFTFEDERANORDNUNG**
SELF-CLOSING PNEUMATIC SPRING SYSTEM
DISPOSITIF D'AMORTISSEMENT PNEUMATIQUE A FERMETURE AUTOMATIQUE

(30) Priorität: 07.07.1999 DE 19931195
(43) Veröffentlichungstag der Anmeldung: 27.06.2001
(73) Patentinhaber: Phoenix AG, 21079 Hamburg (DE)
(72) Erfinder: FEJERDY, Stefan, H-1024 Budapest (HU)
(86) Internationale Anmeldenummer: DE0001324
(87) Internationale Veröffentlichungsnummer: WO01003957

(56) Entgegenhaltungen:
- DE-A- 19 539 151
- US-A- 4 786 035
- US-A- 5 749 566
- RUSSIAN PATENTS ABSTRACTS Section PQ, Week 199243 Derwent Publications Ltd., London, GB; Class Q63, AN 1992-355661 XP002148755 & SU 1 693 299 A (RAKHMANOV N N), 23. November 1991 (1991-11-23)

## Beschreibung

Die Erfindung betrifft eine Luftfederanordnung, umfassend wenigstens folgende Bauteile, nämlich:
- einen Luftfederdeckel und einen Luftfederkolben, die zueinander gegenüberliegend angeordnet sind;
- einen Luftfederbalg aus elastomerem Werkstoff, der den Luftfederdeckel und den Luftfederkolben unter Verwendung von Befestigungsmitteln miteinander verbindet und zumeist mit einem eingebetteten Festigkeitsträger versehen ist, wobei der Balg unter Bildung eines volumenelastischen Luftfederinnenraumes an der Außenwand des Kolbens abrollen kann;
- einen Anschluß zum Be- und Entlüften des Luftfederinnenraumes; sowie ein Verbindungssystem, das sich innerhalb des Luft-feder innenrammes befindet, vgl. DE 195 39 151 A1.

Eine ähnliche Luftfederanordnung ist beispielsweise in den Druckschriften DE 42 28 513 A1 und WO 98/54016 A1 beschrieben.

Luftfederanordnungen können sich in folgenden zwei Zuständen befinden:
(a) mit Luft gefüllt (Betriebszustand) oder
(b) entlüftet.

Bei Luftfederanordnungen von Fahrzeugen, die insbesondere durch einen Kran angehoben werden, tritt nun folgendes Problem auf. Beim Wiederabsetzen rollt der Luftfederbalg oft nicht mehr richtig an der Außenwand des Abrollkolbens ab. Die Beschädigung des Luftfederbalges wie auch anderer Bauteile sind die Folge, was dann bis zum Totalausfall einer Luftfederanordnung führen kann. Besonders kritisch ist dabei der Zustand (b), wenn das Fahrzeug durch den Kran angehoben wird.

Im Hintergrund dieser Problematik besteht nun die Aufgabe der Erfindung darin, eine gattungsgemäße Luftfederanordnung bereitzustellen, die selbstschließend ist, so daß im Zustand (b) das Fahrzeug durch den Kran ohne Schädigung der Luftfederanordnung angehoben werden kann, jedoch im Zustand (a) wieder vollbetriebsfähig ist.

Gelöst wird diese Aufgabe bei einer gattungs gemäßen Luftfederanordnung dadurch, daß
- das Verbindungssystem durckempfindlich ist und derart auf Druck reagiert, daß bei entlüftetem Zustand der Luftfederdeckel und der Luftfederkolben miteinander verbunden sind, wobei sich die Verbindung im Betriebszustand, wenn also der Luftfederinnenraum mit Luft gefüllt ist, durch den Innendruck wieder löst.

Vorteilhafte Gestaltungsvarianten der erfindungsgemäßen Luftfederanordnung sind in den Patentansprüchen 2 bis 16 genannt.

Die Erfindung wird nun anhand von Ausführungsbeispielen unter Bezugnahme auf drei Zeichnungen erläutert. Es zeigen:
- Fig. 1: Axialschnitt einer entlüfteten Luftfederanordnung mit geschlossenem Verbindungssystem;
- Fig. 2: Axialschnitt einer Luftfederanordnung mit geöffnetem Verbindungssystem (Betriebszustand);
- Fig. 3: Radialschnitt einer Luftfederanordnung im Bereich der Membrane und des Federelementes (Betriebszustand).

In Verbindung mit diesen Figuren gilt folgende Bezugsziffernliste:
- **1**: Luftfederanordnung
- **2**: Luftfederdeckel
- **3**: Luftfederbalg aus elastomerem Werkstoff
- **4**: Luftfederkolben (Abroll- bzw. Tauchkolben)
- **5**: Außenwand des Luftfederkolbens (Abrollbereich)
- **6**: Luftfederinnenraum
- **7**: Anschluß zum Be- und Entlüften des Luftfederinnenraumes
- **8**: Befestigungsmittel für den Luftfederbalg
- **9**: druckempfindliches Verbindungssystem
- **10**: Verbindungsstange
- **11**: Widerhaken
- **12**: druckempfindliches Verschlußelement
- **13**: Innenzylinder
- **14**: Außenseite des Innenzylinders
- **15**: seitliche Durchbrechung
- **16**: Außenzylinder (Innengehäuse des Abrollkolbens)
- **17**: Innenseite des Außenzylinders
- **18**: zylindrische Membrane aus elastomerem Werkstoff
- **19**: Befestigungsmittel für die Membrane
- **20**: Federelement
- **21**: Federarm
- **22**: Anschlag
- **23**: flanschförmige Verbreiterung des Innenzylinders
- **24**: flanschförmige Verbreiterung des Außenzylinders
- **25**: Anschlagpuffer
- **26**: trichterförmige Durchbrechung
- **27**: Abstützung

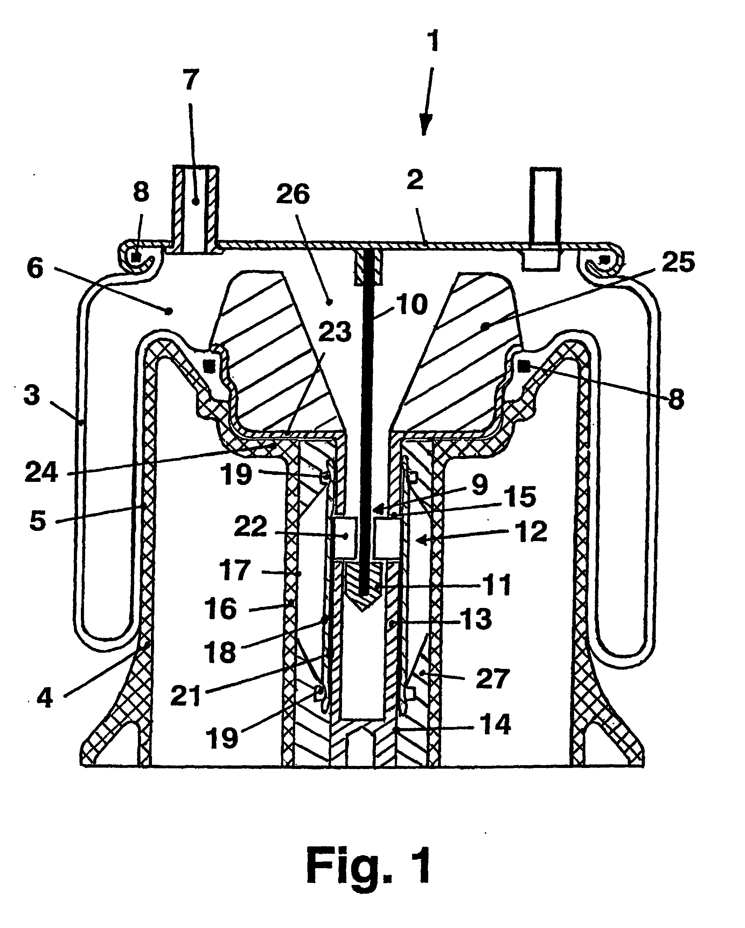

Fig. **1** zeigt eine Luftfederanordnung **1**, wobei sich innerhalb des Luftfederinnenraumes **6** ein druckempfindliches Verbindungssystem **9** befindet. Dieses System besteht dabei aus einer Verbindungsstange **10,** die innenseitig und zentriert am Luftfederdeckel **2** befestigt ist sowie innerhalb des Verbindungsbereiches mit einem Widerhaken **11** versehen ist, und femer aus einem druckempfindlichen Verschlußelement **12**, das innerhalb des Luftfederkolbens **4** integriert ist und wiederum folgende Bauteile umfaßt, nämlich:
- einen Innenzylinder **13** für die Aufnahme der Verbindungstange **10**, wobei der Innenzylinder mit wenigstens zwei seitlichen Durchbrechungen **15** versehen ist;
- einen Außenzylinder **16,** der hier zugleich das Innengehäuse des Luftfederkolbens **4** bildet;
- eine zwischen dem Innenzylinder **13** und Außenzylinder **16** angeordnete zylinderförmige Membrane **18** aus elastomerem Werkstoff, die an ihren jeweiligen Enden unter Verwendung von Befestigungsmitteln **19** an der Außenseite **14** des Innenzylinders **13** befestigt ist;
- wenigstens zwei Federelemente **20**, die jeweils aus einem Federarm **21** und einem Anschlag **22,** der in die entsprechende Durchbrechung **15** des Innenzylinders **13** ragt, besteht, wobei im entlüfteten Zustand gemäß Fig. **1** das Federelement mittels der Membrane **18** vollständig an die Außenseite **14** des Innenzylinders **13** gedrückt wird, so daß der in die Durchbrechung **15** hineinragende Anschlag **22** hinter dem Widerhaken **11** der Verbindungsstange **10** zu liegen kommt und somit den Verschluß bewirkt.

Die Membrane **18** ist insbesondere innerhalb ihres Befestigungsbereiches (Befestigungsmittel **19)** mit einem eingebetteten Festigkeitsträger, der aus einem im wesentlichen nicht dehnfähigen Werkstoff besteht, ausgestattet. Der druckempfindliche Teil der Membrane **18**, also der Bereich zwischen den Befestigungsmitteln **19**, ist dagegen frei von einem Festigkeitsträger, um die Flexibilität der Membrane nicht zu beeinträchtigen.

Der Innenzylinder **13** ist ferner an seinem oberen Ende mit einer flanschförmigen Verbreiterung **23** versehen, die auf einer flanschförmigen Verbreiterung **24** des Außenzylinders **16** aufsitzt. Auf der Verbreiterung **23** wiederum sitzt ein Anschlagpuffer **25** aus elastomerem Werkstoff auf, der mit einer mittigen trichterförmigen Durchbrechung **26** für die Verbindungsstange **10** versehen ist. Auf diese Weise wird eine Wegbegrenzung erzielt, falls der Widerhaken **11** beim Schließvorgang zu tief, also weit über den Anschlag **22** des Federelementes hinaus, in den Innenzylinder **13** hineintaucht. Gleichzeitig wird eine Pufferwirkung gegenüber dem Luftfederdeckel **2** bewirkt.

Die Druckempfindlichkeit des Verbindungssystems **9** ist so eingestellt, daß es auch dann schließt, wenn im Luftfederinennraum **6** noch ein minimaler Überdruck geblieben ist, so daß die Verbindung des Luftfederdeckels **2** mit dem Luftfederkolben **4** auch bei nicht vollständiger Entlüftung erfolgt.

Der Luftfederdeckel **2** ist mit einem Anschluß **7** zum Be- und Entlüften des Luftfederinnenraumes **6** versehen. Auch wenn dies das häufigste Anordnungsprinzip ist, so kann der Anschluß auch an einem anderen Luftfederbauteil vorhanden sein, beispielsweise am Luftfederbalg **3** (DE 42 28 513 A1). Der Anschluß ist üblicherweise ventilgesteuert.

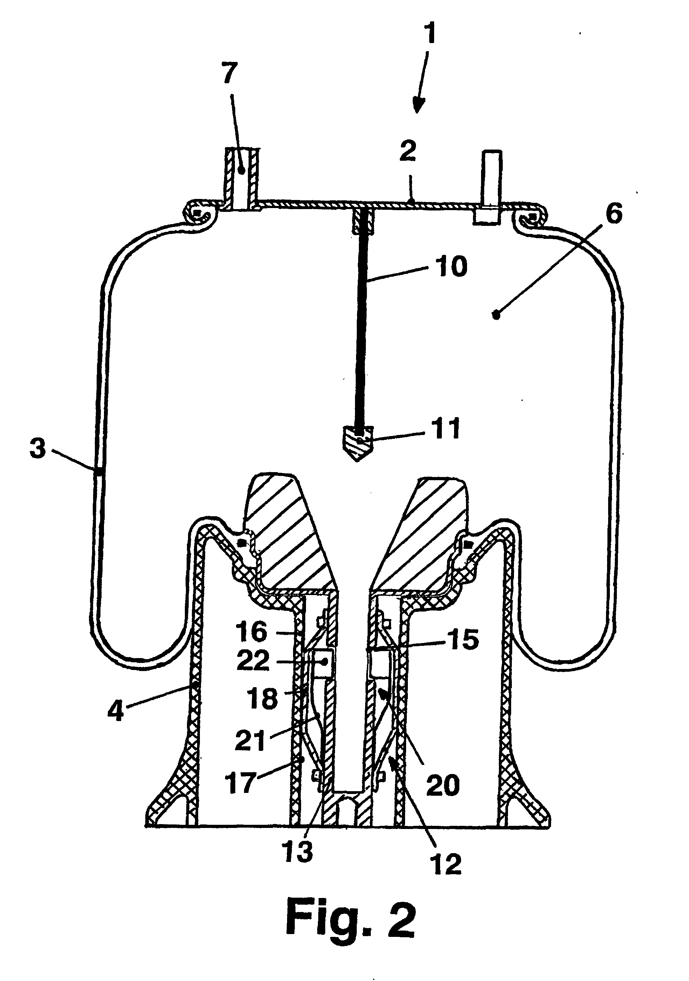

Fig. **2** zeigt nun eine Luftfederanordnung **1** im Betriebszustand, in dem die Verbindungsstange **10** mit Widerhaken **11** ausgefahren ist. Die Membrane **18** liegt nun an der Innenseite **17** des Außenzylinders **16** an. Dadurch gibt das Federelement **20**, umfassend den Federarm **21** und den Anschlag **22**, den Innenzylinder **13** frei, indem der Anschlag **22** nur noch partiell (d.h. nicht verschließend) in die Durchbrechung **15** hineinragt.

Zwischen dem Innenzylinder **13** und dem Außenzylinder **16**, und zwar im Befestigungsbereich der Membrane **18,** kann eine zusätzliche Abstützung **27** (Fig. 1) für die Membrane im Betriebszustand vorhanden sein.

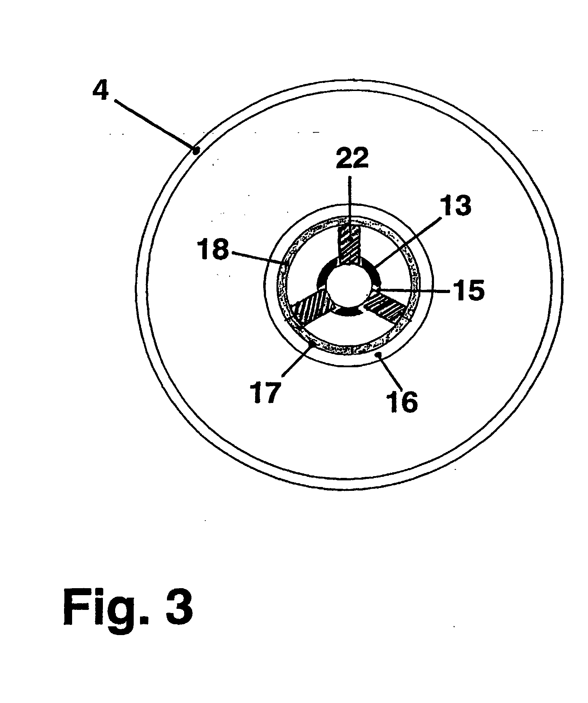

Fig. **3** zeigt nun den Luftfederkolben **4** mit dem Außenzylinder **16**, an dessen Innenseite **17** die zylinderförmige Membrane **18** im Betriebszustand anliegt.

Im Rahmen einer besonders zweckmäßigen Ausführung sind drei Federelemente vorhanden, die im Drittelkreisabstand zueinander angeordnet sind, wobei den insgesamt drei Anschlägen **22** drei korrespondierende Durchbrechungen **15** zugeordnet sind. In diesem Zustand ist der Innenzylinder **13** freigegeben.

## Patentansprüche

1. Luftfederanordnung (1), umfassend wenigstens folgende Bauteile, nämlich:
- einen Luftfederdeckel (2) und einen Luftfederkolben (4), die zueinander gegenüberliegend angeordnet sind;
- einen Luftfederbalg (3) aus elastomerem Werkstoff, der den Luftfederdeckel (2) und den Luftfederkolben (4) unter Verwendung von Befestigungsmitteln (8) miteinander verbindet und zumeist mit einem eingebetteten Festigkeitsträger versehen ist, wobei der Balg unter Bildung eines volumenelastischen Luftfederinnenraumes (6) an der Außenwand (5) des Kolbens abrollen kann;
- einen Anschluß (7) zum Be- und Entlüften des Luftfederinnenraumes (6); sowie
- ein Verbindungssystem (9), das sich innerhalb des Luftfederinnenraumes (6) befindet
**dadurch gekennzeichnet, daß**
- das Verbindungssystem druckempfindlich ist und derart auf Druck reagiert, daß bei entlüftetem Zustand der Luftfederdeckel (2) und der Luftfederkolben (4) miteinander verbunden sind, wobei sich die Verbindung im Betriebszustand, wenn also der Luftfederinnenraum (6) mit Luft gefüllt ist, durch den Innendruck wieder löst.

2. Luftfederanordnung nach Anspruch 1, **dadurch gekennzeichnet**, das druckempfindliche Verbindungssystem (9) wenigstens folgende Bauteile umfaßt, nämlich:
- eine Verbindungsstange (10), die innerhalb eines Verbindungsbereiches mit einem Widerhaken (11) versehen ist; sowie
- ein druckempfindliches Verschlußelement (12), in das der Widerhaken (11) der Verbindungsstange (10) im entlüfteten Zustand einrastet.

3. Luftfederanordnung nach Anspruch 2, **dadurch gekennzeichnet, daß** das druckempfindliche Verschlußelement (12) wenigstens folgende Bauteile umfaßt, nämlich:
- einen Innenzylinder (13) für die Aufnahme der Verbindungsstange (10), wobei der Innenzylinder mit wenigstens einer seitlichen Durchbrechung (15), insbesondere mit wenigstens zwei Durchbrechungen, versehen ist;
- einen Außenzylinder (16);
- eine zwischen dem Innenzylinder (13) und Außenzylinder (16) angeordnete zylinderförmige Membrane (18) aus elastomerem Werkstoff, die an ihren jeweiligen Enden unter Verwendung von Befestigungsmitteln (19) an der Außenseite (14) des Innenzylinders (13) befestigt ist und im Betriebszustand an der Innenseite (17) des Außenzylinders (16) unter gleichzeitiger Freigabe des Innenzylinders (13) anliegt; sowie
- wenigstens ein Federelement (20), insbesondere wenigstens zwei Federelemente, wobei jedes Federelement aus einem Federarm (21) und einem Anschlag (22), der in die entsprechende Durchbrechung (15) des Innenzylinders (13) ragt, besteht, wobei im entlüfteten Zustand das Federelement mittels der Membrane (18) vollständig an die Außenseite (14) des Innenzylinders (13) gedrückt wird, so daß der in die Durchbrechung (15) hineinragende Anschlag (22) hinter dem Widerhaken (11) der Verbindungsstange (10) zu liegen kommt und somit den Verschluß bewirkt.

4. Luftfederanordnung nach Anspruch 3, **dadurch gekennzeichnet, daß** zwei Federelemente (20) vorhanden sind, die gegenüberliegend zueinander angeordnet sind, wobei den insgesamt zwei Anschlägen (22) zwei korrespondierende Durchbrechungen (15) zugeordnet sind.

5. Luftfederanordnung nach Anspruch 3, **dadurch gekennzeichnet, daß** drei Federelemente (20) vorhanden sind, die im Drittelkreisabstand zueinander angeordnet sind, wobei den insgesamt drei Anschlägen (22) drei korrespondierende Durchbrechungen (15) zugeordnet sind.

6. Luftfederanordnung nach Anspruch 3, **dadurch gekennzeichnet, daß** vier Federelemente (20) vorhanden sind, die im Viertelkreisabstand zueinander angeordnet sind, wobei den insgesamt vier Anschlägen (22) vier korrespondierende Durchbrechungen (15) zugeordnet sind.

7. Luftfederanordnung nach einem der Ansprüche 2 bis 6, **dadurch gekennzeichnet, daß** das druckempfindliche Verschlußelement (12) innerhalb des Luftfederkolbens (4) integriert ist, während die Verbindungsstange (10) innenseitig und zentriert am Luftfederdeckel (2) befestigt ist.

8. Luftfederanordnung nach einem der Ansprüche 3 bis 6 in Verbindung mit Anspruch 7, **dadurch gekennzeichnet, daß** der Außenzylinder (16) des druckempfindlichen Verschlußelementes (12) zugleich das Innengehäuse des Luftfederkolbens (4) bildet.

9. Luftfederanordnung nach einem der Ansprüche 3 bis 8, **dadurch gekennzeichnet, daß** der Innenzylinder (13) an seinem oberen Ende mit einer flanschförmigen Verbreiterung (23) versehen ist, die auf einer flanschförmigen Verbreiterung (24) des Außenzylinders (16) aufsitzt.

10. Luftfederanordnung nach einem der Ansprüche 1 bis 9, **dadurch gekennzeichnet, daß** das druckempfindliche Verbindungssystem (9) mit einem Anschlagpuffer (25), insbesondere aus elastomerem Werkstoff, versehen ist.

11. Luftfederanordnung nach Anspruch 9 und 10, **dadurch gekennzeichnet, daß** der Anschlagpuffer (25) auf der flanschförmigen Verbreiterung (23) des Innenzylinders (13) aufsitzt und mit einer mittigen Durchbrechung (26) für die Verbindungsstange (10) versehen ist.

12. Luftfederanordnung nach Anspruch 11, **dadurch gekennzeichnet, daß** die Durchbrechung (26) trichterförmig ist.

13. Luftfederanordnung nach einem der Ansprüche 3 bis 12, **dadurch gekennzeichnet, daß** die Membrane (18) innerhalb ihres Befestigungsbereiches mit einem eingebetteten Festigkeitsträger ausgestattet ist, während der druckempfindliche Teil der Membrane frei von einem Festigkeitsträger ist.

14. Luftfederanordnung nach Anspruch 13, **dadurch gekennzeichnet, daß** der Festigkeitsträger aus einem im wesentlichen nicht dehnfähigen Werkstoff besteht.

15. Luftfederanordnung nach einem der Ansprüche 3 bis 14 **dadurch gekennzeichnet, daß** zwischen dem Innenzylinder (13) und Außenzylinder (16), und zwar im Befestigungsbereich der Membrane (18), eine zusätzliche Abstützung (27) für die Membrane im Betriebszustand vorhanden ist.

16. Luftfederanordnung nach einem der Ansprüche 1 bis 15, **dadurch gekennzeichnet, daß** die Druckempfindlichkeit des Verbindungssystems (9) so eingestellt ist, daß es auch dann schließt, wenn im Luftfederinnenraum (6) noch ein minimaler Überdruck geblieben ist, so daß die Verbindung des Luftfederdeckels (2) mit dem Luftfederkolben (4) auch bei nicht vollständiger Entlüftung erfolgt.

## Claims

1. Air spring arrangement (1), comprising at least the following components, namely:
- an air spring cover (2) and an air spring piston (4) which are arranged facing one another;
- an air spring bellows (3) made of elastomer material which connects the air spring cover (2) and the air spring piston (4) to one another using fastening means (8) and is usually provided with an embedded strength member, the bellows being able to roll on the outer wall (5) of the piston, forming an air spring internal chamber (6) of elastic volume;
- a connection (7) for letting air in and out of the air spring internal chamber (6); and
- a connection system (9) which is located inside the air spring internal chamber (6);
**characterised in that**
- the connection system (9) is pressure-sensitive and reacts to pressure in such a way that when the air is removed the air spring cover (2) and the air spring piston (4) are connected to one another, the connection being separated again by the internal pressure in the operating state, namely when the air spring internal chamber (6) is filled with air.

2. Air spring arrangement according to claim 1, **characterised in that** the pressure-sensitive connection system (9) comprises at least the following components, namely:
- a connecting rod (10) which is provided with a barb (11) inside a connection area; and
- a pressure-sensitive closing element (12) into which the barb (11) of the connecting rod (10) locks when the air is removed.

3. Air spring arrangement according to claim 2, **characterised in that** the pressure-sensitive closing element (12) comprises at least the following components, namely:
- an internal cylinder (13) for reception of the connecting rod (10), the internal cylinder being provided with at least one lateral opening (15), in particular with at least two openings;
- an external cylinder (16);
- a cylindrical diaphragm (18) which is made of elastomer material and arranged between the internal cylinder (13) and the external cylinder (16) and is fastened at its respective ends to the outside (14) of the internal cylinder (13) using fastening means (19) and in the operating state bears on the inside (17) of the external cylinder (16) while simultaneously releasing the internal cylinder (13); and
- at least one spring element (20), in particular at least two spring elements, each spring element consisting of a spring arm (21) and a stop (22) which projects into the corresponding opening (15) of the internal cylinder (13), the spring element being pressed completely against the outside (14) of the internal cylinder (13) by means of the diaphragm (18) when the air is removed so that the stop (22) projecting into the opening (15) comes to lie behind the barb (11) of the connecting rod (10) and thus causes the closure.

4. Air spring arrangement according to claim 3, **characterised in that** two spring elements (20) are present which are arranged facing one another, the two stops (22) in total co-operating with two corresponding openings (15).

5. Air spring arrangement according to claim 3, **characterised in that** three spring elements (20) are present which are arranged with a spacing of a third of a circle, the three stops (22) in total co-operating with three corresponding openings (15).

6. Air spring arrangement according to claim 3, **characterised in that** four spring elements (20) are present which are arranged with a spacing of a quarter of a circle, the four stops (22) in total co-operating with four corresponding openings (15).

7. Air spring arrangement according to one of claims 2 to 6, **characterised in that** the pressure-sensitive closing element (12) is integrated inside the air spring piston (4) while the connecting rod (10) is fastened on the inside and centred on the air spring cover (2).

8. Air spring arrangement according to one of claims 3 to 6 in conjunction with claim 7, **characterised in that** the external cylinder (16) of the pressure-sensitive closing element (12) also forms the internal housing of the air spring piston (4).

9. Air spring arrangement according to one of claims 3 to 8, **characterised in that** at its upper end the internal cylinder (13) is provided with a flange-shaped widening (23) which sits on a flange-shaped widening (24) of the external cylinder (16).

10. Air spring arrangement according to one of claims 1 to 9, **characterised in that** the pressure-sensitive connection system (9) is provided with a stop buffer (25), in particular made of elastomer material.

11. Air spring arrangement according to claim 9 and 10, **characterised in that** the stop buffer (25) sits on the flange-shaped widening (23) of the internal cylinder (13) and is provided with a central opening (26) for the connecting rod (10).

12. Air spring arrangement according to claim 11, **characterised in that** the opening (26) is funnel-shaped.

13. Air spring arrangement according to one of claims 3 to 12, **characterised in that** inside its fastening area the diaphragm (18) is provided with an embedded strength member while the pressure-sensitive part of the diaphragm is free of a strength member.

14. Air spring arrangement according to claim 13, **characterised in that** the strength member consists of an essentially unstretchable material.

15. Air spring arrangement according to one of claims 3 to 14, **characterised in that** an additional support (27) for the diaphragm in the operating state is present between the internal cylinder (13) and external cylinder (16), in the fastening area of the diaphragm (18).

16. Air spring arrangement according to one of claims 1 to 15, **characterised in that** the pressure-sensitivity of the connection system (9) is set so that it also closes even when there is still a minimal positive pressure left in the air spring internal chamber (6) so that the air spring cover (2) is still connected to the air spring piston (4) even when the air has not been removed completely.

## Revendications

1. Dispositif d'amortissement pneumatique (1), comprenant au moins les composants suivants, précisément :
- un couvercle de ressort pneumatique (2) et un piston de ressort pneumatique (4), disposés l'un en face de l'autre ;
- un soufflet formant ressort pneumatique (3) en matériau élastomère, reliant ensemble le couvercle de ressort pneumatique (2) et le piston de ressort pneumatique (4) avec utilisation de moyens de fixation (8) et muni le plus souvent d'un support de résistance incorporé, le soufflet pouvant rouler sur la paroi extérieure (5) du piston en formant un espace intérieur de ressort pneumatique (6) présentant une élasticité volumique ;
- un raccordement (7) pour aérer et désaérer l'espace intérieur de ressort pneumatique (6) ; ainsi qu'
- un système de liaison (9), qui se trouve à l'intérieur de l'espace intérieur de ressort pneumatique (6) ;
**caractérisé en ce que**
- le système de liaison est sensible à la pression et réagit à la pression de manière que, à l'état désaéré, le couvercle de ressort pneumatique (2) et le piston de ressort pneumatique (4) soient reliés ensemble ; la liaison à l'état de fonctionnement, lorsque donc l'espace intérieur de ressort pneumatique (8) est rempli d'air, s'interrompant de nouveau du fait de la pression intérieure.

2. Dispositif selon la revendication 1, **caractérisé en ce que** le système de liaison (9) sensible à la pression comprend au moins les composants suivants, précisément :
- une tige de liaison (10) munie, dans une zone de liaison, d'un contre-crochet (11) ; et
- un élément de fermeture (12) sensible à la pression, dans lequel s'encliquette le contre-crochet (11) de la tige de liaison (10) lorsqu'on est à l'état désaéré.

3. Dispositif selon la revendication 2, **caractérisé en ce que** l'élément de fermeture (12) sensible à la pression comprend au moins les composants suivants, précisément :
- un cylindre intérieur (13) pour loger la tige de logement (10), le cylindre intérieur étant muni d'au moins une traversée (15) latérale, en particulier d'au moins deux traversées ;
- un cylindre extérieur (16);
- une membrane (18) à forme cylindrique disposée entre le cylindre intérieur (13) et le cylindre extérieur (16), la membrane étant en matériau élastomère et étant fixée à ses extrémités respectives en utilisant des moyens de fixation (19) sur la face extérieure (14) du cylindre intérieur (13) et, à l'état de fonctionnement, s'appuyant sur la face intérieure (17) du cylindre extérieur (16), avec dégagement simultané du cylindre intérieur (13);
- au moins un élément élastique (20), en particulier au moins deux éléments élastiques, chaque élément élastique étant formé d'un bras de ressort (21) et d'une butée (22), pénétrant dans la traversée (15) correspondante du cylindre intérieur (13), sachant que, à l'état désaéré, l'élément élastique est pressé à l'aide de la membrane (18) complètement sur la face extérieure (14) du cylindre intérieur (13), de manière que la butée (22) pénétrant dans la traversée (15) vienne se placer derrière le contre-crochet (11) de la tige de liaison (10) et provoque ainsi la fermeture.

4. Dispositif selon la revendication 3, **caractérisé en ce que** deux éléments élastiques (20) sont prévus, disposés l'un en face de l'autre, aux butées (22), au nombre total de deux, étant associées deux traversées (15) correspondantes.

5. Dispositif selon la revendication 3, **caractérisé en ce que** sont prévus trois éléments élastiques (20), disposés selon un espacement de la valeur d'un tiers de circonférence l'un par rapport à l'autre, aux butées (22), globalement au nombre de trois, étant associées trois traversées (15) correspondantes.

6. Dispositif selon la revendication 3, **caractérisé en ce que** sont prévus quatre éléments élastiques (20), disposés selon un espacement de la valeur d'un quart de circonférence l'un par rapport à l'autre, aux butées (22), globalement au nombre de quatre, étant associées quatre traversées (15) correspondantes.

7. Dispositif selon l'une des revendications 2 à 6, **caractérisé en ce que** l'élément de fermeture (12) sensible à la pression est incorporé dans le piston de ressort pneumatique (4), tandis que la tige de liaison (10) est fixée intérieurement et centrée sur le couvercle de ressort pneumatique (2).

8. Dispositif selon l'une des revendications 3 à 6, en liaison avec la revendication 7, **caractérisé en ce que** le cylindre extérieur (13) de l'élément de fermeture (12) sensible à la pression forme en même temps le boîtier intérieur du piston de ressort pneumatique (4).

9. Dispositif selon l'une des revendications 3 à 8, **caractérisé en ce que** le cylindre intérieur (13) est muni, à son extrémité supérieure, d'un élargissement (23) en forme de bride reposant sur un élargissement (24), en forme de bride, du cylindre extérieur (16).

10. Dispositif selon l'une des revendications 1 à 9, **caractérisé en ce que** le système de liaison (9) sensible à la pression est muni d'un tampon de butée (25), en particulier réalisé en matériau élastomère.

11. Dispositif selon les revendications 9 et 10, **caractérisé en ce que** le tampon de butée (25) repose sur l'élargissement (23) en forme de bride du cylindre intérieur (13) et est muni d'une traversée (26) centrale pour la tige de liaison (10).

12. Dispositif selon la revendication 11, **caractérisé en ce que** la traversée (26) est en forme d'entonnoir.

13. Dispositif selon l'une des revendications 3 à 12, **caractérisé en ce que** la membrane (18) est équipée, à l'intérieur de sa zone de fixation, d'un support de résistance incorporée, tandis que la partie, sensible à la pression, de la membrane est exempte de tout support de résistance.

14. Dispositif selon la revendication 13, **caractérisé en ce que** le support de résistance est formé d'un matériau pratiquement non extensible.

15. Dispositif selon l'une des revendications 3 à 14, **caractérisé en ce qu'**entre le cylindre intérieur (13) et le cylindre extérieur (16) et, précisément, dans la zone de fixation de la membrane (18), est prévu un appui (27) supplémentaire pour la membrane, à l'état de fonctionnement.

16. Dispositif selon l'une des revendications 1 à 15, **caractérisé en ce que** la sensibilité à la pression du système de liaison (9) est réglée de manière qu'il se ferme également lorsque, dans l'espace intérieur de ressort pneumatique (6), subsiste encore une surpression minimale, de sorte que la liaison du couvercle de ressort pneumatique (2) au piston de ressort pneumatique (4) se fait également lorsque la désaération n'est pas complète.
